# EUROPÄISCHE PATENTSCHRIFT

(11) **EP 2 217 836 B1**
(45) Veröffentlichungstag und Bekanntmachung des Hinweises auf die Patenterteilung: **27.04.2011**
(21) Anmeldenummer: 09768936.8
(22) Anmeldetag: 18.06.2009
(51) Int. Cl.: F16H 59/10

(54) **SCHALTVORRICHTUNG FÜR EIN GETRIEBE**
GEARSHIFTING DEVICE FOR A TRANSMISSION
DISPOSITIF DE CHANGEMENT DE VITESSES POUR BOITE DE VITESSES

(30) Priorität: 18.06.2008 DE 102008028619
(43) Veröffentlichungstag der Anmeldung: 18.08.2010
(73) Patentinhaber: ECS Engineered Control Systems AG, 9015 St. Gallen (CH)
(72) Erfinder: PÄTZOLD, Wolfgang, 37154 Northeim (DE)
(74) Vertreter: Müller, Eckhard
(86) Internationale Anmeldenummer: PCT/EP2009/004382
(87) Internationale Veröffentlichungsnummer: WO 2009/156087

(56) Entgegenhaltungen:
- EP-A1- 0 899 478
- JP-A- 2005 119 440
- US-B1- 6 230 579
- US-B1- 6 295 886

## Beschreibung

Die Erfindung betrifft eine Schaltvorrichtung für ein Getriebe mit einem Wählhebel, welcher derart bewegbar ist, dass in wenigstens zwei Schaltgassen verschiedene Schaltstufen anwählbar sind und ein Umschalten zwischen einer der Schaltgassen und der wenigstens einen anderen Schaltgasse ermöglicht ist, mit wenigstens einer Sperre, durch welche der Verfahrweg des Wählhebels bezüglich einer der Schaltgassen für ein Schalten von einer der Schaltstufen in eine andere der Schaltstufen sperrbar ist, und mit wenigstens einem mit dem Wählhebel mechanisch gekoppelten Verriegelungsteil, durch welches die Schaltsperre aktivierbar und deaktivierbar ist, indem bezüglich der zu sperrenden Schaltgasse das Verriegelungsteil in den Verfahrweg des Wählhebels hinein und hinaus bringbar ist. Die Erfindung betrifft ferner ein Getriebe, insbesondere Automatikgetriebe, mit einer solchen Schaltvorrichtung.

### Stand der Technik

Aus der DE 102 49 074 A1 ist eine Schaltvorrichtung zum Schalten eines automatischen Getriebes bekannt, welches eine zusätzliche manuelle Schaltfunktion aufweist. Bei der bekannten Schaltvorrichtung lassen sich durch Verschwenken eines Wählhebels in einer ersten Schaltgasse verschiedene automatisch schaltbare Fahrstufen, wie beispielsweise "P", "R", "N", "D" vorwählen. Der Wählhebel kann über eine Quergasse von der ersten Schaltgasse in eine zweite Schaltgasse umgeschaltet werden, in der einzelne manuell schaltbare Gänge vorwählbar sind. Das Schalten der manuell schaltbaren Gänge in der zweiten Schaltgasse erfolgt durch Verschwenken des Wählhebels in zwei entgegengesetzte Richtungen, zum Beispiel in Fahrtrichtung und in die zur Fahrtrichtung entgegengesetzte Richtung. Dies geschieht bereits durch Antippen des Wählhebels, wodurch ein sogenannter Plus-Sensor und Minus-Sensor ansprechen, welche eine Hochschaltung bzw. Herunterschaltung der manuellen Gänge veranlassen.

Bei der bekannten Schaltvorrichtung wird aus Sicherheitsgründen das Schalten zwischen bestimmten Fahrstufen in der ersten Schaltgasse durch eine Sperre verhindert, die durch die Betätigung eines Betätigungselements überwunden werden kann. Diese Schaltsperre ist in der zweiten Schaltgasse, welche die zusätzliche manuelle Schaltfunktion bereitstellt, nicht erwünscht. Denn in der zweiten Schaltgasse soll gerade durch einfaches Tippen bzw. Verschwenken des Wählhebels die Hochschaltung bzw. Herunterschaltung der manuellen Gänge ausgelöst werden.

Um ein freies Bewegen des Wählhebels in der ersten Schaltgasse mit den automatisch schaltbaren Fahrstufen zu verhindern, aber gleichfalls eine freie Bewegung des Wählhebels in der zweiten Schaltgasse zu ermöglichen, weist die bekannte Schaltvorrichtung ein Zwischenstück auf, welches sich in der ersten Schaltgasse gegenüber dem Gehäuse abstützt und einen Anschlag für den Wählhebel bildet. Das Zwischenstück ist auf einer Kulisse angeordnet, an der der Wählhebel schwenkbar gelagert ist. Beim Umschalten von der ersten Schaltgasse in die zweite Schaltgasse, wird der Wählhebel zusammen mit der Kulisse verschwenkt. Damit würde bei der bekannten Schaltvorrichtung das Zwischenstück auch in der zweiten Schaltgasse eine Sperre für den Wählhebel bilden. Um dies zu verhindern, ist das Zwischenstück auf der Kulisse verschiebbar angeordnet und das Gehäuse in der Weise versetzt, dass der Wählhebel in Richtung der zweiten Schaltgasse so weit frei bewegbar ist, dass das Hochschalten bzw. Herunterschalten der manuellen Gänge erfolgen kann. Das Zwischenstück ist dabei durch den Wählhebel nach außen verschoben. Um zu gewährleisten, dass das Zwischenstück wieder in seine Ausgangsposition zurückkehrt, ist ein Federelement vorgesehen.

Bei der bekannten Schaltvorrichtung werden damit technisch relativ aufwendige Maßnahmen ergriffen, um in der ersten Schaltgasse den Verfahrensweg des Wählhebels zu versperren und in der zweiten Schaltgasse den Wählhebel frei bewegen zu können.

Eine weitere Schaltvorrichtung mit automatischem Getriebemodus und zusätzlichem manuellen Getriebemodus ist aus der EP 0 899 478 A1 bekannt. Die Schaltvorrichtung weist eine Schaltsperre auf, welche aus Sicherheitsgründen ein Schalten des Wählhebels der Schaltvorrichtung von einer Schaltstufe in eine andere Schaltstufe innerhalb einer Schaltgasse verhindert. Dazu ist an dem Wählhebel ein Positionsbolzen vorgesehen, welcher sich mit dem Wählhebel bewegt und beim Verfahren des Wählhebels im Zuge eines Schaltversuches gegen die Schaltsperre schlägt. Die Schaltsperre ist durch einen
Anschlag gebildet, welcher an einer Seitenwandung des Gehäuses der Schaltvorrichtung ausgebildet ist. Die Seitenwandung weist dazu eine Durchgangsöffnung auf, deren obere Berandung den Anschlag bildet. Das Profil der Öffnungsberandung ist in der Weise ausgebildet, dass entlang des Verfahrweges des Wählhebels weitere Schaltsperren bildende Anschläge erzeugt sind.

Bei der bekannten Schaltvorrichtung sind zwei derartige Seitenwandungen vorgesehen, wobei zwischen den Seitenwandungen der Wählhebel liegt. In der vertikalen Ausgangsposition des Wählhebels, in welcher der Wählhebel sich in der Schaltgasse für den automatischen Getriebemodus befindet, ist der mit dem Wählhebel gekoppelte Positionsbolzen horizontal ausgerichtet und greift mit seinen beiden Enden jeweils in die Öffnung der Seitenwandungen. In dieser Lage des Positionsbolzens ist der Verfahrweg des Wählhebels innerhalb der Schaltgasse für den automatischen Getriebemodus durch wenigstens einen der Anschläge an der Öffnungsberandung begrenzt. Wird der Wählhebel von der Schaltgasse für den automatischen Getriebemodus in die Schaltgasse für den manuellen Getriebemodus verschwenkt, gelangt der Positionsbolzen entsprechend der Verschwenkung des Wählhebels in eine geneigte Lage. In dieser Lage greift der Positionsbolzen nur noch mit seinem einen Ende in die Öffnung der einen Seitenwandung ein und hat mit seinem anderen Ende die Eingriffsposition bezüglich der Öffnung der anderen Seitenwandung verlassen. Bei der bekannten Schaltvorrichtung ist zusätzlich ein relativ aufwendiger Mechanismus vorgesehen, durch welchen beim Verschwenken des Wählhebels der Positionsbolzen zusätzlich geradlinig nach unten verschoben wird. Dadurch ist der Positionsbolzen mit seinem in die eine Öffnung eingreifenden Ende soweit nach unten verrückt, dass die Schwenkbewegung des Wählhebels in der Schaltgasse für den manuellen Getriebemodus nicht mehr durch die eine Schaltsperre begrenzt wird und somit ist die Schaltsperre deaktiviert. Die Schwenkbewegung des Wählhebels wird jedoch durch eine weiter entfernt liegende Schaltsperre begrenzt.

Bei der bekannten Schaltvorrichtung werden damit relativ aufwendige Maßnahmen ergriffen, um bei deaktivierter Schaltsperre für den Wählhebel ausreichend Verfahrweg zur Verfügung zu stellen, um dem Fahrer des Fahrzeuges ein angenehmes Betätigungsgefühl zu vermitteln.

Eine gattungsgemäße Schaltvorrichtung ist aus der US 6,230,579 B1 bekannt. Ähnliche Schaltvorrichtungen sind in der JP 2005 119440 A und der US 6,295,886 B1 beschrieben.

### Aufgabenstellung

Es ist daher Aufgabe der Erfindung, eine Schaltvorrichtung für ein Getriebe mit den eingangs genannten Merkmalen vorzuschlagen, dessen Schaltsperre auf technisch einfache Weise aktivierbar und deaktivierbar ist. Ferner soll bei deaktivierter Schaltsperre der Wählhebel der Schaltvorrichtung über einen ausreichend großen, ein angenehmes Schaltgefühl hervorrufenden Verfahrweg bewegbar sein.

### Erfindung und vorteilhafte Wirkungen

Zur Lösung der Aufgabe wird eine Schaltvorrichtung für ein Getriebe vorgeschlagen, welche die in Anspruch 1 genannten Merkmale aufweist. Ferner wird eine Schaltvorrichtung mit den Merkmalen des Anspruchs 6 vorgeschlagen. Vorteilhafte Ausgestaltungen der erfindungsgemäßen Schaltvorrichtungen sind in den Ansprüchen 2 bis 5 und in den Ansprüchen 7 bis 14 beschrieben.

Die erfindungsgemäßen Schaltvorrichtungen weisen einen Wählhebel auf, welcher derart bewegbar ist, dass in wenigstens zwei Schaltgassen verschiedene Schaltstufen des Getriebes anwählbar sind und ein Umschalten zwischen einer der Schaltgassen und der wenigstens einen anderen Schaltgasse ermöglicht ist. Ferner weisen die Schaltvorrichtungen wenigstens eine Sperre auf, durch welche das Schalten des Wählhebels von einer der Schaltstufen in eine andere der Schaltstufen innerhalb wenigstens einer der Schaltgassen verhinderbar ist, indem der Verfahrweg des Wählhebels bezüglich der wenigstens einen Schaltgasse versperrbar ist.

Es ist wenigstens ein mit dem Wählhebel mechanisch gekoppeltes Verriegelungsteil vorgesehen, durch welches die Schaltsperre aktivierbar und/oder deaktivierbar ist, in dem bezüglich der zu sperrenden Schaltgasse das Verriegelungsteil in den Verfahrweg des Wählhebels hinein und/oder heraus bringbar ist. Dadurch ist ein Aktivieren bzw. Deaktivieren der Schaltsperre auf technisch einfache Weise realisiert, indem dazu nämlich lediglich ein einziges Bauteil vorgesehen ist. Auf zusätzliche Bauteile, wie beispielsweise Rückstellfedern, kann ebenso verzichtet werden, wie auf fertigungstechnisch aufwendig herzustellende Bauteilstrukturen, wie beispielsweise Gleitflächen, welche bei der bekannten Schaltvorrichtung nach der DE 102 49 074 A1 zum Verfahren des Zwischenstückes an der Kulisse vorzusehen sind. Auch ist auf technisch einfache Weise der Verfahrweg des Wählhebels nicht begrenzt, wenn die Schaltsperre deaktiviert ist, indem das Verriegelungsteil dann aus dem Verfahrweg des Verriegelungsteils heraus gebracht ist. Die erfindungsgemäße Maßnahme ermöglicht es somit, ein Schalten von einer Schaltstufe in eine andere Schaltstufe einer Schaltgasse zu verhindern, indem die Schaltsperre in dieser Schaltgasse aktiviert ist, gleichfalls aber eine freie Bewegung des Wählhebels in einer der anderen Schaltgassen durch Deaktivierung der Schaltsperre zuzulassen.

Es kann vorgesehen sein, dass bezogen auf die zu sperrende Schaltgasse, zum Aktivieren der Schaltsperre das Verriegelungsteil im Wesentlichen von oben in den Verfahrweg des Wählhebels hinein bringbar ist. Diese Maßnahme ist technisch besonders einfach realisierbar, da die Schaltvorrichtung üblicherweise mit ihrem Unterteil an.dem Karosserieboden eines Fahrzeuges montiert wird und daher von unten kommend relativ wenig Bauraum zur Verfügung steht. Auch ist ein in der Weise bewegbares Verriegelungsteil von außen relativ einfach und leicht zugänglich. Bevorzugt sollte daher auch zum Deaktivieren der Schaltsperre das Verriegelungsteil im Wesentlichen nach oben aus dem Verfahrweg des Wählhebels heraus bringbar sein.

Es kann ferner vorgesehen sein, dass Verriegelungsteil und Wählhebel miteinander derart mechanisch gekoppelt sind, dass durch Bewegen des Wählhebels zwischen den Schaltgassen das Verriegelungsteil in seine die Schaltsperre aktivierende Position oder in seine die Schaltsperre deaktivierende Position gebracht wird. Dadurch wird alleine durch die Bewegung des Wählhebels die Schaltsperre aktiviert bzw. deaktiviert.

Weiterhin kann es vorgesehen sein, dass zum Bewegen des Wählhebels von der einen Schaltstufe in die andere Schaltstufe der einen Schaltgasse, insbesondere der gesperrten Schaltgasse, das Verriegelungsteil in axialer Richtung des Wählhebels anhebbar ist. Durch Verschieben des Verriegelungsteiles nach oben kann die Schaltsperre auf technisch einfache Weise überwunden werden. Damit ist ein Mechanismus realisiert, mittels welchem dauerhaft und sicher ein Umschalten von einer Schaltstufe in eine andere Schaltstufe einer Schaltgasse ermöglicht wird, bei welcher die Schaltsperre mittels dem Bediener des Wählhebels überwunden werden kann.

Auch kann es vorgesehen sein, dass das Verriegelungsteil in seine die Schaltsperre aktivierende Position verschwenkbar ist. Vorzugsweise sollten dabei Verriegelungsteil und Wählhebel gemeinsam um eine erste Drehachse verschwenkbar sein. Hierdurch ist auf besonders einfache Weise eine definierte Bewegung des Wählhebels wie auch des Verriegelungsteiles ermöglicht, indem eine Schwenkbewegung um die erste Drehachse stattfindet. Das Verriegelungsteil ist damit in den Schwenkweg des Wählhebels hinein und heraus bringbar.

Nach der Erfindung ist es gemäß dem Anspruch 1 vorgesehen, dass bei aktivierter Schaltsperre das Verriegelungsteil zumindest mit einem Abschnitt zwischen der Schaltsperre und einem mit dem Wählhebel zusammenwirkenden Mitnehmer eingreift.

Dabei kann es vorgesehen sein, dass in der angewählten Schaltstufe die Schaltsperre und die Kontur des Mitnehmers eine Aufnahme für den Abschnitt des Verriegelungsteils bilden. Dadurch kann das Verriegelungsteil die Verriegelungsposition einnehmen, also in die Aufnahme eintauchen, ohne dass die Bewegung des Verriegelungsteils durch etwaiges Verkanten oder dergleichen erschwert ist. Denn durch die Aufnahme ist baulich bereits eine entsprechende Maßnahme ergriffen, um das Verriegelungsteil sicher aufnehmen zu können.

Nach einer weiteren Ausgestaltung der Erfindung ist es vorgesehen, dass der Mitnehmer axial bezüglich des Wählhebels verschiebbar ist. Dadurch kann die Schaltsperre überwunden werden, indem nämlich der Mitnehmer angehoben bzw. nach oben bewegt wird. In dieser angehobenen Position kann die beispielsweise als Rampe ausgebildete Schaltsperre problemlos überwunden und der Wählhebel weiter in Richtung zur nächsten Schaltstufe bewegt werden.

Es bietet sich dabei an, dass der Mitnehmer eine Durchgangsöffnung aufweist, durch welche sich der Wählhebel erstreckt. Dadurch können von dem Mitnehmer beliebige Bewegungen des Wählhebels übertragen werden, da der Wählhebel bei sämtlichen Bewegungen quer zu seiner Längsachse den Mitnehmer mitnehmen kann.

Nach einer vorteilhaften Ausgestaltung der Erfindung ist es vorgesehen, dass der Mitnehmer ein Langloch aufweist, durch welches sich der Wählhebel erstreckt. Dadurch ist der Wählhebel innerhalb der Längserstreckung des Langloches frei bewegbar, ohne dass die Bewegung des Wählhebels in dieser Richtung von dem Mitnehmer übertragen wird. Durch das Langloch kann beispielsweise der Wählhebel über eine Quergasse von einer Schaltgasse zur anderen Schaltgasse bewegt werden.

Bevorzugt sollte sich das Langloch des Mitnehmers links und rechts einer Schaltgasse erstrecken. Dadurch ist es möglich, dass die andere Schaltgasse entweder links oder rechts der einen Schaltgasse angeordnet werden kann. Damit ist die Schaltvorrichtung für einen Einsatz in Fahrzeugen mit Rechtslenkern, wie auch in Fahrzeugen mit Linkslenkern geeignet, da die jeweils andere Schaltgasse links oder rechts bezüglich der einen Schaltgasse angeordnet werden kann. Natürlich bietet das Langloch auch die Möglichkeit, dass drei Schaltgassen vorgesehen sind, nämlich eine sich mittig vom Langloch erstreckende Schaltgasse sowie jeweils eine seitlich links und rechts dazu sich vom Langloch erstreckenden andere Schaltgasse.

Nach der Erfindung ist es gemäß dem Anspruch 6 eine Kulissenführung vorgesehen, welche die Bewegung des Wählhebels beim Umschalten zwischen den Schaltgassen in eine Bewegung des Verriegelungsteils zum Aktivieren oder Deaktivieren der Schaltsperre umsetzt. Durch die Kulissenführung ist auf technische einfache Weise die Umwandlung von einer Bewegungsart in eine andere Bewegungsart möglich.

Es bietet sich dabei an, dass der Wählhebel um eine erste Drehachse verschwenkbar ist und die Kulissenführung die Schwenkbewegung des Wählhebels in eine lineare Bewegung des Verriegelungsteiles umsetzt und auf diese Weise in den Schwenkweg des Wählhebels hinein und heraus bringbar ist. Dadurch ist ein technisch ungünstiges Schrägstellen des Verriegelungsteiles vermieden. Durch die lineare Bewegung ist das Verriegelungsteil ferner einfach führbar.

Nach einer bevorzugten Ausgestaltung der Erfindung ist es vorgesehen, dass die Kulissenführung durch wenigstens eine im Wesentlichen vertikale Führungsfläche eines mit dem Wählhebel in Richtung der Schaltgassen bewegbaren Führungsteiles und eine schräg dazu angeordnete Führungsfläche des Verriegelungsteiles gebildet ist, wobei das Verriegelungsteil an der Führungsfläche des Führungsteiles vertikal verschiebbar ist und an der schrägen Führungsfläche des Verriegelungsteiles ein die Schwenkbewegung des Wählhebels übertragendes Teil angreift. Dadurch ist ein Umsetzen der Schwenkbewegung des Wählhebels in eine lineare Bewegung des Verriegelungsteiles in vertikaler Richtung sicher möglich, wobei durch die Führungsflächen ein Schrägstellen oder Verkanten des Verriegelungsteiles beim Bewegen in vertikaler Richtung vermieden wird.

Es bietet sich an, dass das Übertragungsteil einen mit der schrägen Führungsfläche des Verriegelungsteiles im Wesentlichen korrespondierenden Gegenflächenabschnitt aufweist. Dadurch kommt es zu einem flächigen Angreifen des Übertragungsteiles an dem Verriegelungsteil, wodurch etwaige Verschleißerscheinungen in den in Wirkstellung tretenden Bereichen aufgrund der flächigen Anlage verringert sind.

Bevorzugt sollte der Gegenflächenabschnitt des Übertragungsteiles nach außen gewölbt ausgebildet sein. Dadurch wird ein Gleiten des Gegenflächenabschnittes des Übertragungsteiles an dem schrägen Flächenabschnitt des Verriegelungsteiles während des Verschwenkens des Wählhebels verbessert, da aufgrund der Wölbung des Gegenflächenabschnittes einem Verkanten entgegengewirkt wird.

Nach einer vorteilhaften Ausgestaltung der Erfindung ist es vorgesehen, dass das Übertragungsteil mit dem Wählhebel fest verbunden ist. Dadurch ist eine optimale Kraftübertragung bzw. Bewegungsübertragung von dem Wählhebel auf das Übertragungsteil ermöglicht.

Bevorzugt sollte das Übertragungsteil an dem Wählhebel angeformt sein. Hierdurch ist eine besonders einfache Herstellung des Übertragsteiles ermöglicht, insbesondere wenn das Übertragungsteil an einer Kunststoffummantelung des Wählhebels angeformt bzw. angespritzt wird.

Alternativ kann es auch vorgesehen sein, dass das Übertragungsteil gegenüber einem Gehäuseabschnitt der Schaltvorrichtung horizontal verschiebbar ist. Hierdurch ist sichergestellt, dass das Übertragungsteil sich bei der Schwenkbewegung des Wählhebels nicht selbst neigt bzw. verkippt und dadurch ein optimales Gleiten des Übertragungsteiles gegenüber der schrägen Führungsfläche des Verriegelungsteiles nicht mehr gewährleistet ist.

Nach einer Weiterbildung der Erfindung kann es vorgesehen sein, dass das Führungsteil wenigstens zwei vertikale gehäusefeste Führungsflächen aufweist, zwischen denen das Verriegelungsteil vertikal verschiebbar ist. Dadurch ist das Verriegelungsteil bei seiner linearen Bewegung in vertikaler Richtung besonders gut geführt und es können dadurch etwaige Betriebsstörungen der Schaltvorrichtung im Zuge der Deaktivierung der Schaltsperre vermieden werden.

Eine weitere Ausgestaltung der Erfindung besteht darin, dass zum Verschwenken des Wählhebels nach links und nach rechts bezüglich einer vertikalen Ausgangsstellung das Verriegelungsteils zwei schräge Führungsflächen aufweist, welche zueinander spiegelsymmetrisch bezüglich der Mittelachse des Verriegelungsteiles angeordnet sind. Dadurch ist das Verriegelungsteil für den Einsatz in Schaltvorrichtungen sowohl bei Rechtslenkern als auch bei Linkslenkern geeignet. Das Verriegelungsteil kann also bei Schaltvorrichtungen eingesetzt werden, welche ausgehend von einer vertikalen Ausgangsstellung des Wählhebels nach links oder nach rechts verfahrbar sind.

Eine Eignung für den Einsatz in Schaltvorrichtungen bei Links- wie auch bei Rechtslenkern hat auch das Übertragungsteil, wenn nach einer bevorzugten Ausgestaltung der Erfindung das Übertragungsteil zwei mit den schrägen Führungsflächen des Verriegelungsteiles korrespondierende Gegenflächenabschnitte vorgesehen sind, welche zueinander spiegelsymmetrisch bezüglich der Mittelachse des Übertragungsteiles angeordnet sind.

Nach einer weiteren Ausgestaltung der Erfindung ist zum Anheben des Verriegelungsteiles ein mit einem Zugmittel des Wählhebels gekoppeltes Verbindungselement vorgesehen,'welches in eine Öffnung, Durchgang oder Vertiefung oder dergleichen Materialausnehmung des Verriegelungsteiles eingreift. Dadurch ist ein Anheben des Verriegelungsteiles auf besonders einfache Art und Weise realisierbar und für den Bediener des Wählhebels besonders komfortabel durchzuführen.

Es bietet sich an, dass die Materialausnehmung einen mit dem Verbindungselement in Wirkkontakt tretenden Wandungsabschnitt und einen Auslaufbereich aufweist, innerhalb dem bei einer Schwenkbewegung des Wählhebels von der einen Schaltgasse in die andere Schaltgasse das Verbindungselement sich bewegt. Dadurch ist trotz des realisierten Mechanismus zum Anheben des Verriegelungsteiles ein störungsfreies Aktivieren bzw. Deaktivieren der Schaltsperre durch das Verriegelungsteil möglich, da die Bewegung des Verbindungselementes im Zuge des Verfahrens des Wählhebels zwischen den Schaltgassen innerhalb des Auslaufbereiches ungehindert stattfinden kann. Das Anheben des Verriegelungsteiles erfolgt dagegen über den Wandungsabschnitt, gegen welchen das Verbindungselement im Zuge des Anhebevorganges angreift.

Weiterhin bietet es sich an, dass die wenigstens eine Schaltsperre gehäusefest ist. Durch diese Ausbildung der Schaltsperre am Gehäuse, vorzugsweise am Gehäuse der Schaltvorrichtung, ist eine stabile und hohe Belastungen aufnehmende Schaltsperre realisiert.

Es können mehrere Schaltsperren vorgesehen sein, welche der wenigstens einen Schaltgasse zugeordnet sind. Hierdurch können sämtliche oder ein Teil der Schaltstufen der einen Schaltgasse einer solchen Schaltsperre zugeordnet werden, sodass der in dieser Schaltstufe befindliche Wählhebel erst in eine andere Schaltstufe bewegt werden kann, wenn die zugeordnete Schaltsperre überwunden ist.

Nach einer vorteilhaften Ausgestaltung der Erfindung ist es vorgesehen, dass die mit der Schaltsperre zusammenwirkende Schaltgasse verschiedene automatisch schaltbare Schaltstufen aufweist. Dadurch ist die Schaltvorrichtung für den Einsatz mit einem automatischen Getriebe besonders geeignet.

Eine weitere vorteilhafte Ausgestaltung der Erfindung besteht darin, dass in wenigstens einer der anderen Schaltgassen einzelne manuell schaltbare Gänge anwählbar sind. Dadurch ist die Schaltvorrichtung auch für ein automatisches Getriebe mit einer zusätzlichen manuellen Schaltfunktion geeignet.

Die Bewegung des Wählhebels in den jeweiligen Schaltgassen sowie das Umschalten des Wählhebels zwischen den Schaltgassen, ist besonders einfach realisierbar, wenn nach einer vorteilhaften Ausgestaltung der Erfindung der Wählhebel zum Bewegen in Richtung der Schaltgassen um eine erste Drehachse und zum Bewegen zwischen den Schaltgassen um eine zweite Drehachse verschwenkbar ist.

Bevorzugt ist die erfindungsgemäße Schaltvorrichtung für einen Einsatz in einem Getriebe eines Kraftfahrzeuges, insbesondere Automatikgetriebe, vorgesehen.

### Ausführungsbeispiele

Weitere Ziele, Vorteile, Merkmale und Anwendungsmöglichkeiten der vorliegenden Erfindung ergeben sich aus der nachfolgenden Beschreibung zweier Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform einer Schaltvorrichtung für ein Getriebe in schematischer Darstellung als Draufsicht,
- Fig. 2: die Schaltvorrichtung gemäß Fig. 1 als Teilschnitt gemäß der Schnittlinie A-A nach Fig. 1,
- Fig. 3: eine Ausführungsform der Schaltvorrichtung mit dem Wählhebel in einer ersten Schaltgasse, eingebaut in ein Gehäuse, als perspektivische Ansicht,
- Fig. 4: die in Fig. 3 gezeigte Schaltvorrichtung mit dem Wählhebel in einer zweiten Schaltgasse als perspektivische Darstellung,
- Fig. 5: die Schaltvorrichtung gemäß Fig. 3 mit dem Wählhebel in der ersten Schaltgasse in Draufsicht und
- Fig. 6: die Schaltvorrichtung gemäß Fig. 4 mit dem Wählhebel in der zweiten Schaltgasse in Draufsicht,
- Fig.7: eine weitere mögliche weitere Ausführungsform einer Schaltvorrichtung für ein Getriebe mit einem Wählhebel in einer ersten Schaltgasse als Teilschnitt in perspektivischer Ansicht,
- Fig. 8: die Schaltvorrichtung gemäß Fig. 7 mit dem Wählhebel in einer zweiten Schaltgasse als Teilschnitt in perspektivischer Ansicht,
- Fig. 9: die Schaltvorrichtung gemäß Fig. 7 mit dem Wählhebel in der ersten Schaltgasse, dargestellt in Vorderansicht ohne Gehäuse,
- Fig. 10: die Schaltvorrichtung gemäß Fig. 8 mit dem Wählhebel in der zweiten Schaltgasse, dargestellt in Vorderansicht ohne Gehäuse,
- Fig. 11: eine weitere mögliche Ausführungsform einer Schaltvorrichtung für ein Getriebe mit einem Wählhebel und in einer ersten Schaltgasse, dargestellt in Vorderansicht ohne Gehäuse und
- Fig. 12: die Schaltvorrichtung gemäß Fig. 11 mit dem Wählhebel in einer zweiten Schaltgasse, dargestellt in Vorderansicht ohne Gehäuse.

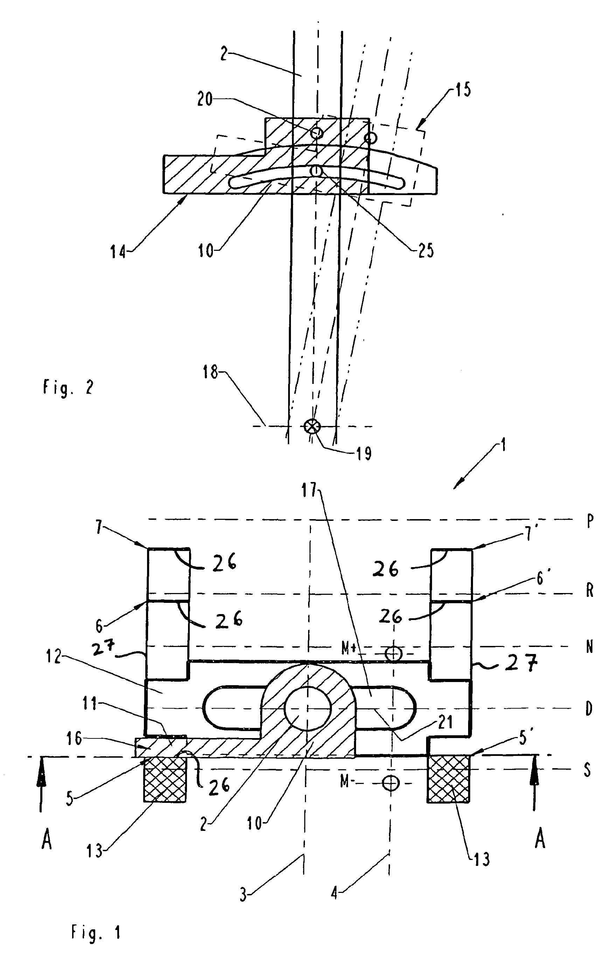

Figuren 1 und 2 zeigen - in schematischer Darstellung - eine mögliche Ausführungsform einer Schaltvorrichtung 1 für ein automatisches Getriebe mit einer zusätzlichen manuellen Schaltfunktion. Die Schaltvorrichtung 1 vereinigt dabei die Vorteile der Schaltung eines herkömmlichen Automatikgetriebes mit den Vorteilen eines manuell zu schaltenden Getriebes.

Die Schaltvorrichtung 1 ist grundsätzlich auch für den Einsatz mit einem manuellen oder automatischen Getriebe geeignet.

Die Schaltvorrichtung 1 weist einen Schalt- und/oder Wählhebel 2 auf, welcher von einem Bediener in verschiedene Positionen gebracht werden kann. Der Schalt- bzw. Wählhebel 2 ist dazu derart bewegbar, dass in einer ersten Schaltgasse 3 verschiedene automatisch schaltbare Fahrstufen, wie beispielsweise "P", "R", "N", "D", "S" und in einer zweiten Schaltgasse 4 einzelne manuell schaltbare Gänge anwählbar sind und ein Umschalten zwischen einer vorbestimmten Fahrstufe der ersten Schaltgasse 3, vorzugsweise die Fahrstufe "D", und einer neutralen Position "M" der zweiten Schaltgasse 4 über eine Querschaltgasse 21 ermöglicht ist. In der zweiten Schaltgasse 4 wird ausgehend von der neutralen Position "M" durch Verschwenken des Wählhebels 2 in eine "M+"-Position und eine "M-"-Position ein Hinauf- bzw. Herunterschalten der manuellen Gänge, beispielsweise der Gänge eins bis vier, bewirkt. Der Wählhebel 2 kehrt nach dem Verschwenken bzw. Tippen in die "M+"-Position oder die "M-"-Position bevorzugt wieder selbsttätig in die neutrale Ausgangsposition "M" zurück.

Zum Umschalten des Wählhebels 2 von der ersten Schaltgasse 3 in die zweite Schaltgasse 4 und umgekehrt, ist der Wählhebel 2 um eine erste Drehachse 19 drehbar gelagert. Um den Wählhebel 2 in Richtung der jeweiligen Schaltgasse 3 bzw. 4 zu bewegen, ist der Wählhebel 2 zusätzlich schwenkbar um eine zweite Drehachse 18 gelagert.

Wie insbesondere aus Fig. 1 ersichtlich ist, sind in der ersten Schaltgasse 3 für den Automatikmodus mehrere Schaltsperren 5, 6, 7 vorgesehen. Die Schaltsperren 5, 6, 7 sind durch das Gehäuse 13 bzw. eine entsprechende Kontur des Gehäuses 13 der Schaltvorrichtung 1 gebildet. Bevorzugt sind die Schaltsperren 5, 6, 7 jeweils durch eine Anschlagsfläche 26 an einer nach ragenden Vorsprung 27 des Gehäuses 13 gebildet.

Durch die Schaltsperren 5, 6, 7 ist ein Weiterschalten von der jeweiligen Fahrstufe eine andere Fahrstufe verhindert. Die Schaltsperren 5, 6, 7 werden erst überwunden, wenn ein (hier nicht dargestelltes) Betätigungselement betätigt wird.

Bei der Schaltvorrichtung 1 gemäß der Figuren 1 und 2 sperrt in der ersten Schaltgasse 3 die Schaltsperre 5 ein Schalten des Wählhebels 2 von der Fahrstufe "D" in die Fahrstufe "S". Die Schaltsperre 6 verhindert ein Weiterschalten des Wählhebels 2 von der Schaltstufe "N" in die Schaltstufe "R". Ferner verhindert die Schaltsperre 7 ein Weiterschalten des Wählhebels 2 von der Fahrstufe "R" in die Fahrstufe "P".

Im Zuge dieser Anmeldung wird unter "P" die Fahrstufe "Parken", "R" die Fahrstufe "Rückwärtsfahren", "N" die Fahrstufe "neutral", "D" die Fahrstufe "Fahren" und "S" die Fahrstufe "sportliches Fahren" verstanden.

Um ein Umschalten des Wählhebels 2 von der Fahrstufe "D" der ersten Schaltgasse 3 in die neutrale Position "M" der zweiten Schaltgasse 4 durchführen zu können, sind bei der Schaltvorrichtung 1 Mittel zum Aktivieren der Schaltsperre 5 und Mittel zu deren Deaktivierung vorgesehen. Befindet sich der Wählhebel 2 in der Fahrstufe "D", ist die Schaltsperre 5 durch die Mittel aktiviert. Ist der Wählhebel 2 über die Querschaltgasse 21 von der ersten Schaltgasse 3 in die zweite Schaltgasse 4 verschwenkt, ist die Schaltsperre 5 durch die Mittel deaktiviert. Der Wählhebel 2 kann in der zweiten Schaltgasse 4 zwischen den Positionen "M+" und "M-" frei verschwenkt werden.

Die Mittel zum Aktivieren und vorzugsweise auch die Mittel zum Deaktivieren der Schaltsperre 5 sind mit dem Wählhebel 2 mechanisch gekoppelt, so dass durch die Schwenkbewegung des Wählhebels 2 zugleich eine Aktivierung bzw. Deaktivierung der Schaltsperre 5 vollzogen wird.

Bei der Schaltvorrichtung 1 gemäß der Figuren 1 und 2 sind die Mittel zum Aktivieren und die Mittel zum Deaktivieren der Schaltsperre 5 durch ein gemeinsames Bauteil, nämlich das Verriegelungsteil 10, gebildet.

Wie insbesondere aus Fig. 2 ersichtlich ist, ist das Verriegelungsteil 10 in eine Verriegelungsposition 14 überführt, wenn sich der WähJhebel 2 in der ersten Schaltgasse 3 befindet. In dieser Verriegelungsposition 14 ist die Schaltsperre 5 aktiviert. Bei deaktivierter Schaltsperre 5 ist dagegen das Verriegelungsteil 10 in eine Entriegelungsposition 15 überführt. Das Aktivieren bzw. Deaktivieren der Schaltsperre 5 wird also durch die Bewegung des mit dem Wählhebel 2 mechanisch gekoppelten Verriegelungsteils 10 erreicht, welches bezogen auf die zu sperrende Schaltgasse 3 zum Aktivieren der Schaltsperre 5 in den Verfahrweg des Wählhebels 2 hineinbringbar ist und zum Deaktivieren der Schaltsperre 5 aus dem Verfahrweg des Wählhebels 2 herausbringbar ist. Das Verriegelungsteil 10 wird dabei im Wesentlichen von oben in den Verfahrweg des Wählhebels 2 hineingeschwenkt bzw. im Wesentlichen nach oben aus dem Verfahrweg des Wählhebels 2 herausgeschwenkt.

Der Wählhebel 2 ist ein Automatik-Schalthebel bekannter Art und ragt im eingebauten Zustand von der Schaltvorrichtung 1 nach oben. Der Wählhebel 2 ist rohrartig ausgebildet und weist in seinem Innenraum eine Zugstange 24 auf. Die Zugstange 24 ist in dem Wählhebel 2 in zwei Richtungen zwangsgeführt, so dass die Zugstange 24 die Schwenkbewegungen des Wählhebels 2 mitmacht. Die Zugstange 24 ist jedoch gegenüber dem Wählhebel 2 in axialer Richtung verschiebbar, vorzugsweise durch das (hier nicht dargestellte) Betätigungselement.

Bei der Schaltvorrichtung 1 ist das Verriegelungsteil 10 mit der Zugstange 24, beispielsweise mittels wenigstens eines Verbindungsstiftes 20, Schraube, Gewindestange oder dergleichen, fest verbunden. Das Verriegelungsteil 10 kann auch mittels thermischem Fügeverfahren, durch Kleben oder dergleichen mit der Zugstange 24 fest verbunden sein. Auch kann das Verriegelungsteil 10 an der Zugstange 24 angeformt sein. Das Verriegelungsteil 10 macht damit die Schwenkbewegungen des Wählhebels 2 mit und ist in axialer Richtung verschiebbar.

Bevorzugt ist ein Abschnitt 23 des Verriegelungsteiles 10 ringförmig ausgebildet, durch welchen sich der Wählhebel 2 erstreckt. In dem Abschnitt 23 ist der Wählhebel 2 geführt, wenn die Zugstange 24 bzw. das Verriegelungselement 10 gegenüber dem Wählhebel 2 in axialer Richtung verschoben wird.

In der Verriegelungsposition 14, also bei aktivierter Schaltsperre 5, greift ein Abschnitt 11 des Verriegelungsteils 10 zwischen die Schaltsperre 5 und die Kontur eines Mitnehmers 12 ein und bewirkt somit eine Verriegelung des Wählhebels 2 in der Schaltstufe "D" gegenüber der Schaltstufe "S" der ersten Schaltgasse 3. Dabei bilden die Schaltsperre 5 und die Kontur des Mitnehmers 12 eine Aufnahme 16 für den Abschnitt 11 des Verriegelungsteils 10.

Der Mitnehmer 12 wirkt mit dem Wählhebel 2 in der Weise zusammen, dass der Mitnehmer 12 die Bewegung des Wählhebels 2 in Richtung der Schaltgasse 3 mitmacht. In der Verriegelungsposition 14 bildet das Gehäuse 13 den Anschlag 26 für das Verriegelungsteil 10, welches wiederum für den Mitnehmer 12 einen Anschlag bildet und dadurch die Bewegung des Wählhebels 2 verhindert.

Der Mitnehmer 12 ist axial bezüglich des Schalthebels 2 verschiebbar, insbesondere um zusammen mit dem Verriegelungsteil 10 soweit angehoben zu werden, dass die Schaltsperren 5, 6, 7 überwunden werden können. Bevorzugt ist der Mitnehmer 12 mit der Zugstange 24, beispielsweise mittels eines Verbindungselementes 25, fest verbunden.

Bevorzugt weist der Mitnehmer 12 ein Langloch 17 auf, durch welches sich der Wählhebel 2 erstreckt. Bevorzugt ist der Wählhebel 2 im Wesentlichen mittig im Langloch 17 ausgerichtet, wenn der Wählhebel 2 sich in der ersten Schaltgasse 3 befindet. Links oder rechts dazu ist der Wählhebel 2 in dem Langloch 17 angeordnet, wenn der Wählhebel 2 in die zweite Schaltgasse 4 verschwenkt ist.

Bei der Schaltvorrichtung 1 gemäß der Figuren 1 und 2 sind neben den Schaltsperren 5, 6, 7 zusätzlich die Schaltsperren 5', 6', 7', welche in einem Abstand zu den Schaltsperren 5, 6, 7 angeordnet sind. Dabei wirken die Schaltsperren 5, 5', die Schaltsperren 6, 6' und die Schaltsperren 7, 7' gemeinsam auf die jeweilige Fahrstufe. Bevorzugt sind die Schaltsperren 5, 6, 7 und 5', 6', 7' im Bereich der beiden Enden 22 des Mitnehmers 12 angeordnet, sodass zusammen mit dem Langloch 17 des Mitnehmers 12 die Schaltvorrichtung 1 problemlos umgerüstet werden kann, sofern die zweite Schaltgasse 4 bezüglich der Schaltgasse 3 auf der anderen Seite der Querschaltgasse 21 befindet. Dies ist beispielsweise bei sogenannten Rechtslenker-Fahrzeugen der Fall, bei welchen das Lenkrad auf der rechten Seite angeordnet ist. Dafür würde der Schalthebel 2, ausgehend von der Mittelstellung für die erste Schaltgasse 3 in Richtung nach links verschwenkt werden müssen, was aufgrund des Langloches 17 realisierbar ist. Dazu ist lediglich das Verriegelungsteil 10 verdreht anzuordnen, sodass der Abschnitt 11 des Verriegelungsteils 10 mit der anderen Schaltsperre 5' und dem anderen Ende des Mitnehmers 12 in Eingriff gelangt.

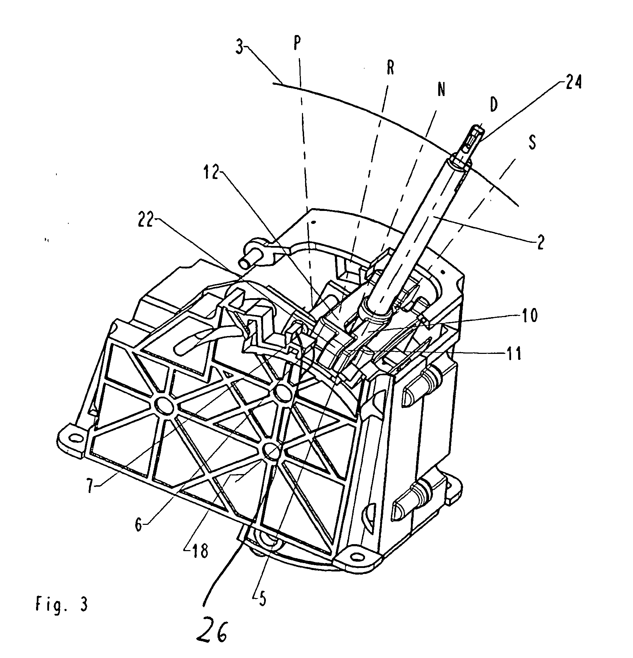

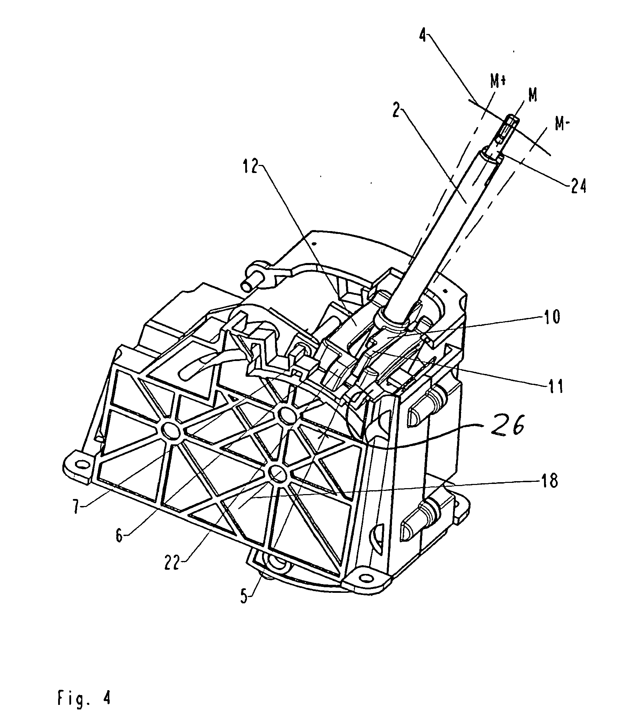

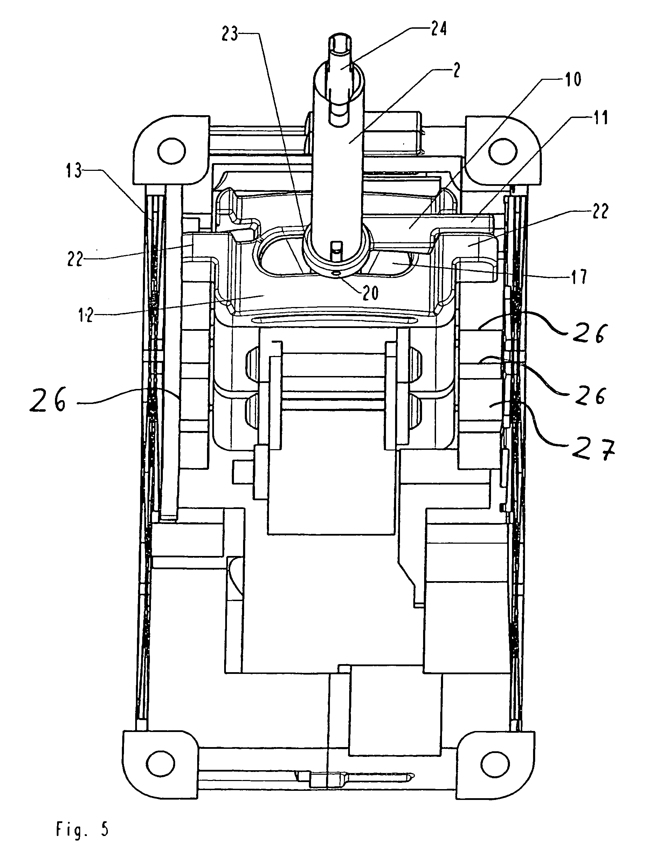

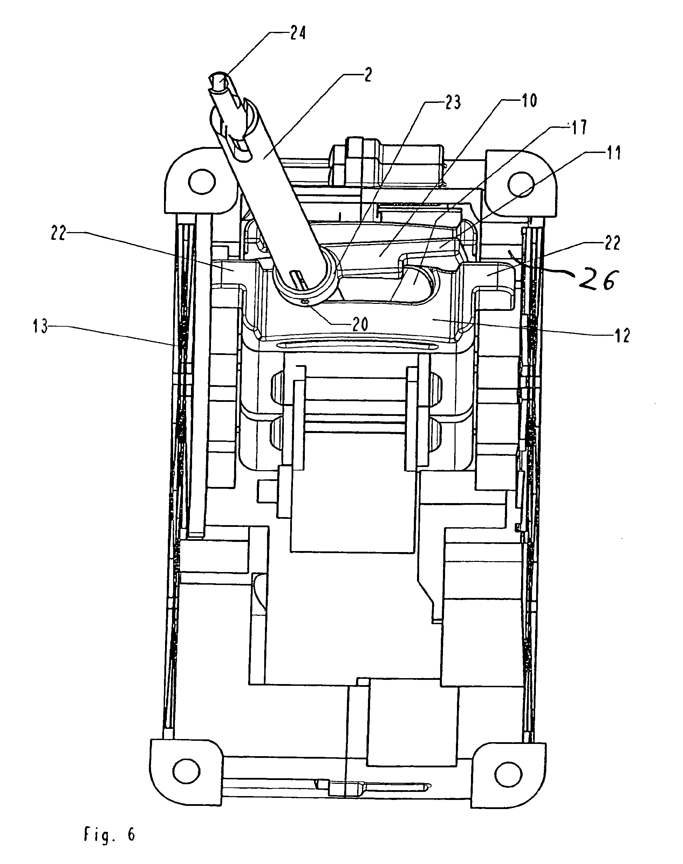

Die Figuren 3 bis 6 zeigen die Schaltvorrichtung 1, eingebaut in das Gehäuse 13. Bauteile der Schaltvorrichtung 1 gemäß der Figuren 3 bis 6, welche mit den Bauteilen gemäß der Figuren 1 und 2 identisch oder funktionsgleich sind, sind mit gleichen Bezugszeichen versehen. Insoweit wird auf die Beschreibung zu den Figuren 1 und 2 verwiesen. Die Figuren 3 und 5 zeigen den Wählhebel 2 in der ersten Schaltgasse 3. Bei den Figuren 3 und 5 befindet sich der Wählhebel 2 in der ersten Schaltgasse 3 bzw. Automatikschaltgasse. Bei den Figuren 4 und 6 befindet sich der Wählhebel 2 in der zweiten Schaltgasse 4.

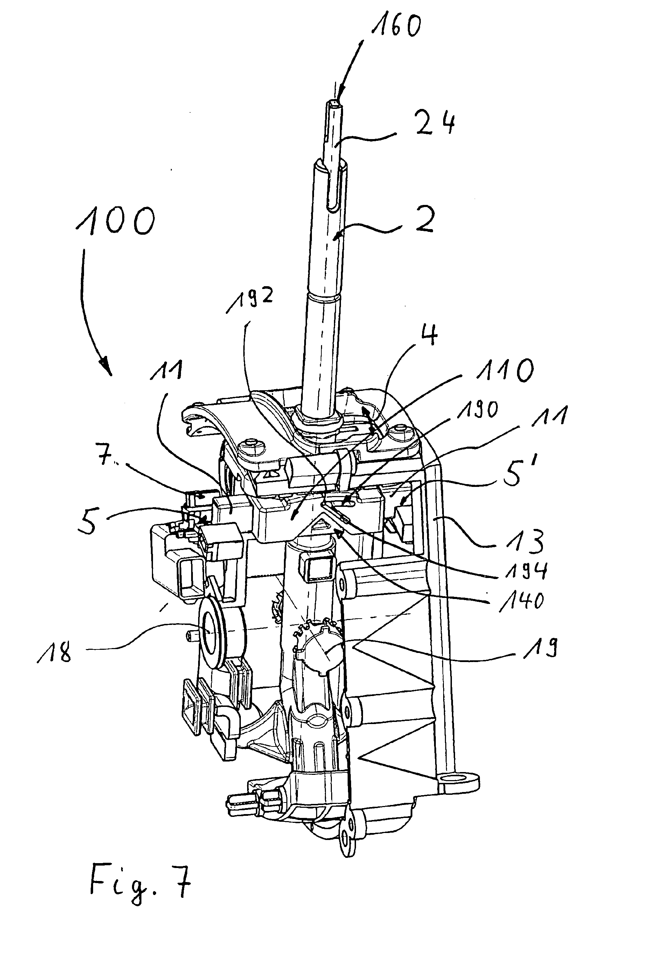

Die Figuren 7 bis 10 zeigen - in schematischer Darstellung - eine weitere Ausführungsform einer erfindungsgemäßen Schaltvorrichtung 100 für ein Getriebe, insbesondere Automatikgetriebe. Bauteile der Schaltvorrichtung 100 gemäß der Figuren 7 bis 10, welche mit den Bauteilen der Schaltvorrichtung 1 gemäß der Figuren 1 bis 6 identisch oder funktionsgleich sind, sind mit gleichen Bezugszeichen versehen. Insoweit wird auf die Beschreibung zu den Figuren 1 bis 6 verwiesen.

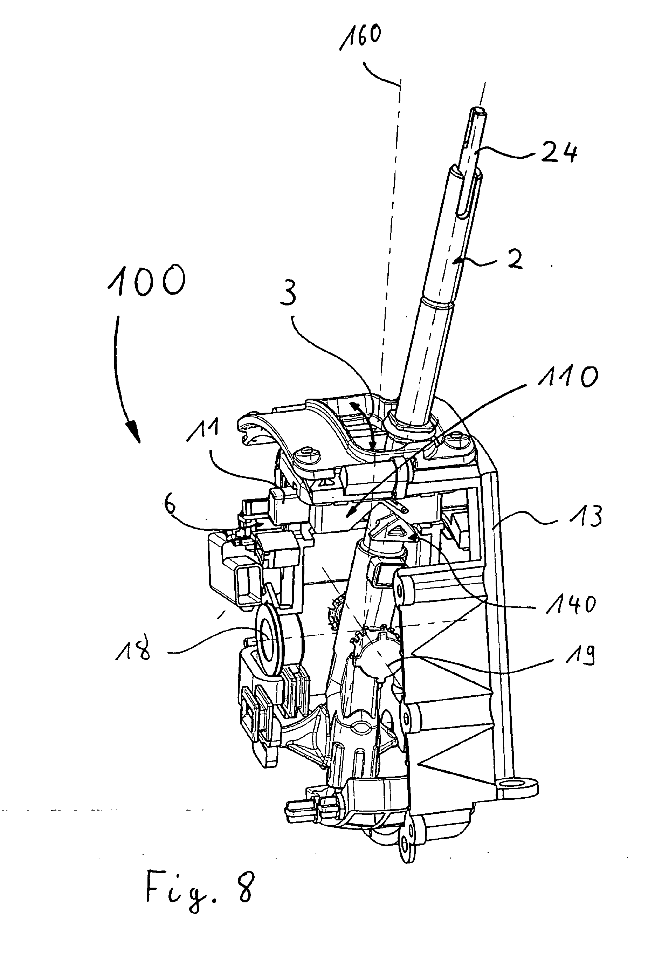

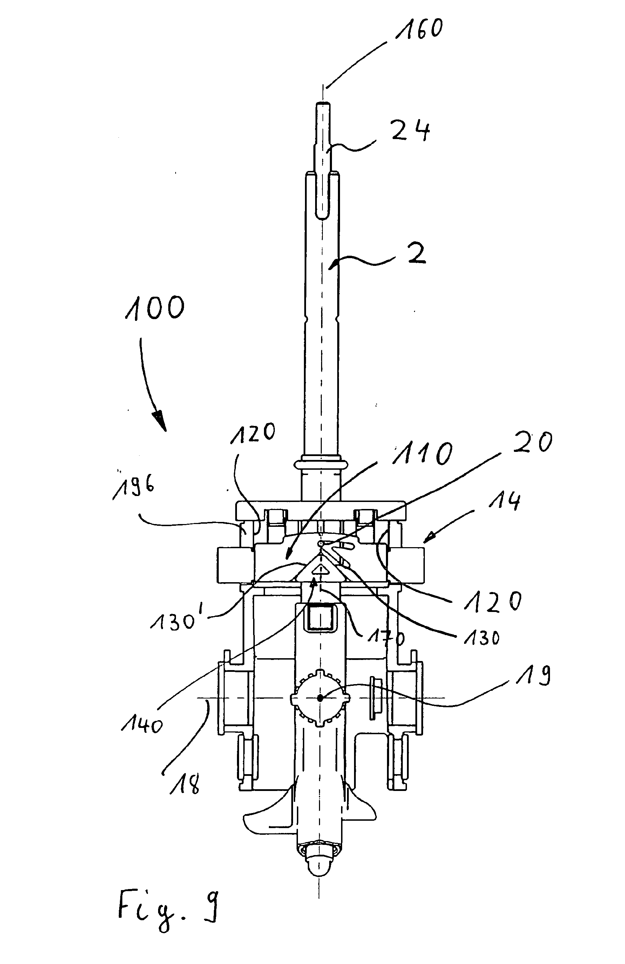

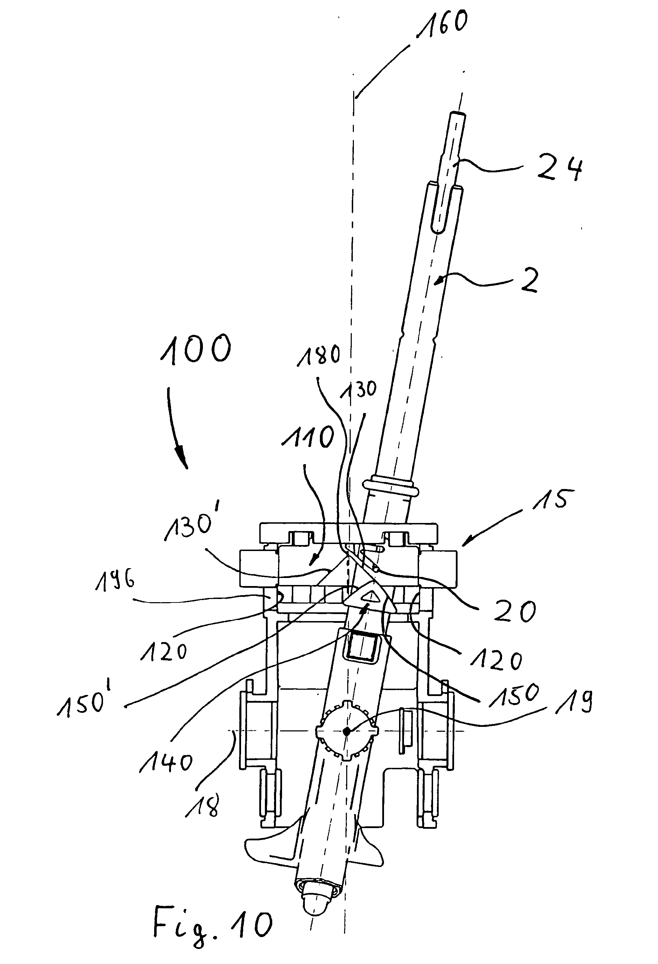

Die Schaltvorrichtung 100 gemäß der Figuren 7 bis 10 unterscheidet sich von der Schaltvorrichtung 1 gemäß der Figuren 1 bis 6 unter anderem dadurch, dass der Wählhebel 2 mit einem Verriegelungsteil 110 mechanisch gekoppelt ist, welches zum Aktivieren bzw. Deaktivieren der Schaltsperre 5 eine im Wesentlichen vertikale Bewegung ausführt. Die Schaltsperre 5 wird also aktiviert, indem bezüglich der zu sperrenden Schaltgasse 3 das Verriegelungsteil 110 in den Verfahrweg des Wählhebels 2 hineinrückt, wie insbesondere aus Figuren 7 und 9 ersichtlich ist. Die Schaltsperre 5 wird in gleicher Weise deaktiviert, indem das Verriegelungsteil 110 aus dem Verfahrweg des Wählhebels 2 herausgerückt wird, wie insbesondere aus Figuren 8 und 10 ersichtlich ist. Bevorzugt wird dabei das Verriegelungsteil 110 von oben nach unten in den Verfahrweg des Wählhebels 2 verfahren und dann von unten nach oben aus dem Verfahrweg des Wählhebels 2 heraus verfahren.

Um die Schwenkbewegung des Wählhebels 2 in die lineare Bewegung des Verriegelungsteiles 110 zu transformieren, ist bei der Schaltvorrichtung 100 eine Kulissenführung vorgesehen. Die Kulissenführung ist durch wenigstens eine im Wesentlichen vertikale Führungsfläche 120 eines mit dem Wählhebel 2 um die zweite Drehachse 18 verschwenkbaren Führungsteiles 196 und eine schräg dazu angeordnete Führungsfläche 130 des Verriegelungsteiles 110 gebildet. Bevorzugt ist das Verriegelungsteil 110 an der Führungsfläche 120 des Führungsteiles 196 vertikal verschiebbar, wobei an der schrägen Führungsfläche 130 des Verriegelungsteiles 110 ein die Schwenkbewegung des Wählhebels 2 übertragendes Teil 140 angreift.

Wie insbesondere aus den Figuren 9 und 10 ersichtlich ist, weist das Führungsteil 196 der Schaltvorrichtung 100 zwei vertikale Führungsflächen 120 auf, zwischen denen das Verriegelungsteil 110 angeordnet ist und bei einem vertikalen Verschieben durch die Führungsflächen 120 geführt ist.

Bei der Schaltvorrichtung 100 weist das Verriegelungsteil 110 neben der schrägen Führungsfläche 130 zusätzlich eine weitere schräge Führungsfläche 130' auf, wobei die Führungsflächen 130 und 130' zueinander spiegelsymmetrisch bezüglich der Mittelachse 170 des Verriegelungsteiles 110 angeordnet sind. Damit ist das Verriegelungsteil 110 für ein Verschwenken des Wählhebels 2 nach links und nach rechts bezüglich einer vertikalen Ausgangsstellung 160 geeignet.

Bevorzugt weist auch das Übertragungsteil 140 zwei mit den schrägen Führungsflächen 130, 130' des Verriegelungsteiles 110 korrespondierende Gegenflächenabschnitte 150, 150' auf, welche zueinander spiegelsymmetrisch bezüglich der Mittelachse 180 des Übertragungsteiles 140 angeordnet ist. Bevorzugt sind die Gegenflächenabschnitte 150, 150' des Übertragungsteiles 140 nach außen gewölbt ausgebildet.

Das Übertragungsteil 140 selbst kann mit dem Wählhebel 2 fest verbunden sein, wie dies bei der Schaltvorrichtung 100 gemäß den Figuren 7 bis 10 realisiert ist. Dort ist das Übertragungsteil 140 an der Kunststoffeinfassung für den Wählhebel 2 angeformt bzw. angespritzt.

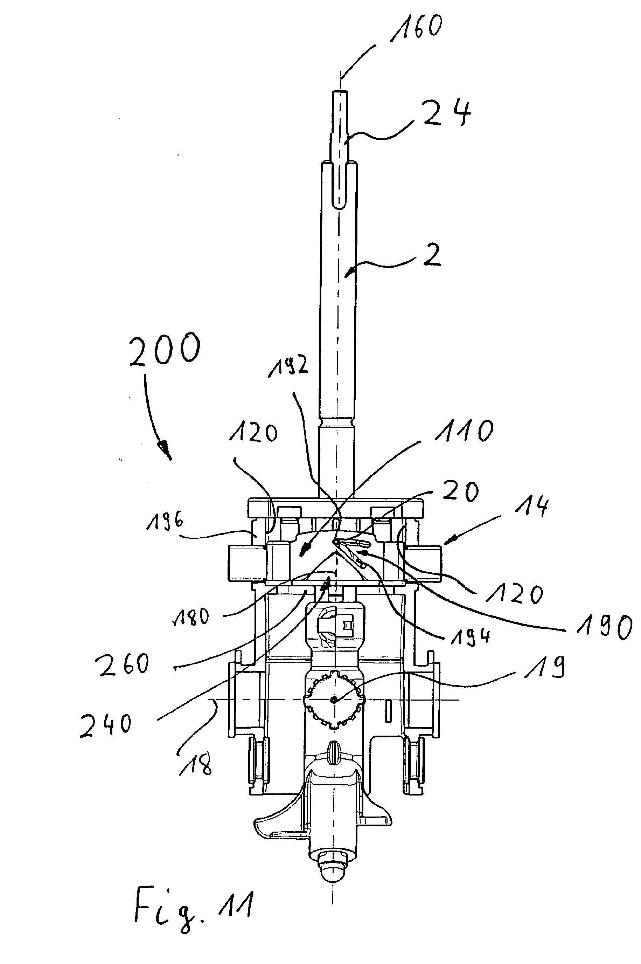

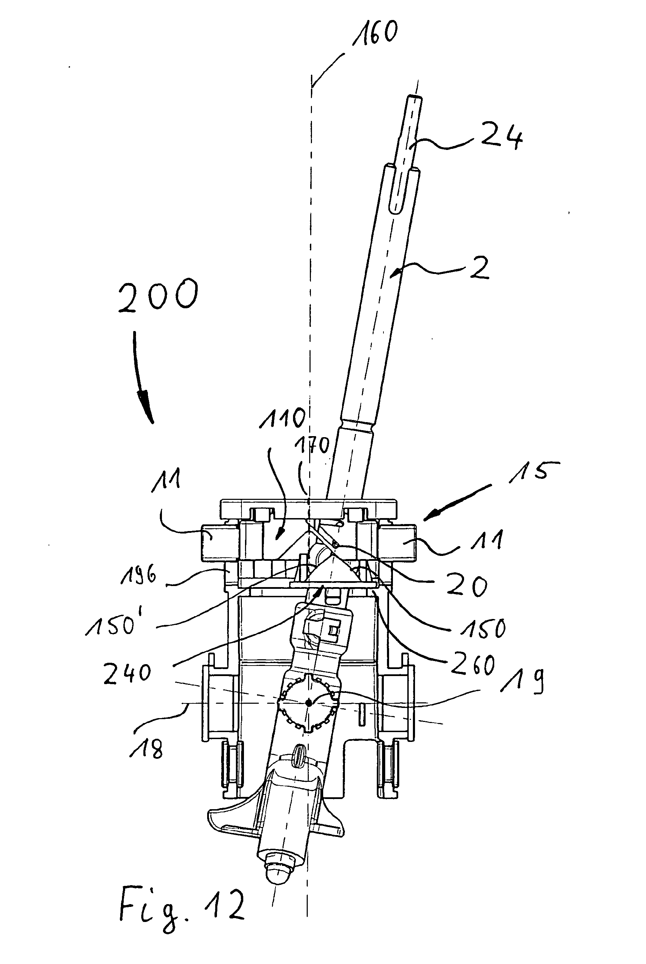

Eine Alternative zeigen die Figuren 11 und 12, welche eine weitere Ausführungsform einer Schaltvorrichtung 200 für ein Getriebe, insbesondere Automatikgetriebe, zeigen. Bauteile der Schaltvorrichtung 200 gemäß der Figuren 11 und 12, welche mit den Bauteilen der Schaltvorrichtung 1 gemäß der Figuren 1 bis 6 sowie den Bauteilen der Schaltvorrichtung 100 gemäß der Figuren 7 bis 10 identisch oder funktionsgleich sind, sind mit gleichen Bezugszeichen versehen. Insofern wird auf die Beschreibung zur Schaltvorrichtung 1 gemäß der Figuren 1 bis 6 sowie der Schaltvorrichtung 100 gemäß den Figuren 7 bis 10 verwiesen.

Bei der Schaltvorrichtung 200 gemäß der Figuren 11 und 12 ist ein Übertragungsteil 240 vorgesehen, welches ein separates Bauteil ist. Das Übertragungsteil 240 ist gegenüber einem Gehäuseabschnitt 260 der Schaltvorrichtung 200 horizontal verschiebbar. Dadurch wird bei einem Verschwenken des Wählhebels 2 von der ersten Schaltgasse 3 in die zweite Schaltgasse 4 das mit dem Wählhebel 2 gekoppelte Übertragungsteil 240 geführt an dem Gehäuseabschnitt 260 horizontal verschoben und drückt mit einem schrägen Gegenflächenabschnitt 150 gegen die schräge Führungsfläche 130 des Verriegelungsteiles 110. Das Verriegelungsteil 110 ist dadurch entlang der vertikalen Führungsflächen 120 geführt, vertikal nach oben verschoben. Das Übertragungsteil 240 bleibt während der Schwenkbewegung des Wählhebels 2 in seiner Drehlage unverändert, da das Übertragungsteil 240 während der Schwenkbewegung des Wählhebels 2 lediglich horizontal bewegt wird.

Bei der Schaltvorrichtung 100 gemäß der Figuren 7 bis 10 und bei der Schaltvorrichtung 200 gemäß der Figuren 11 und 12 weist das Verriegelungsteil 110 eine Durchgangsöffnung bzw. Materialausnehmung 190 auf, in welcher das mit der Zugstange 24 des Wählhebels 2 gekoppelte Verbindungselement 20 eingreift. Durch Betätigen des (hier nicht dargestellten) Betätigungselementes über die Zugstange 24 und das Verbindungselement 20 ist das Verriegelungsteil 110 anhebbar. Dabei tritt das Verbindungselement 20 in Wirkkontakt mit einem Wandungsabschnitt 192 der Materialausnehmung 190. Um zu vermeiden, dass die bei der Deaktivierung der Schaltsperre 5 von dem Verriegelungsteil 110 vollzogene vertikale Bewegung die Zugstange 24 über das Verbindungselement 20 ebenfalls angehoben wird und dadurch möglicherweise das (nicht dargestellte) Betätigungselement beschädigt wird, weist die Materialausnehmung einen Auslaufbereich 194 auf. Bei Deaktivierung der Schaltsperre 5 durch Verschwenken des Wählhebels 2 in die zweite Schaltgasse 4 wird das Verbindungselement 20 der Zugstange 24 in diesen Auslaufbereich 194 der Materialausnehmung 190 verfahren. Innerhalb dem Auslaufbereich 194 kann sich das Verbindungselement 20 frei bewegen, ohne - dass im Zuge der Anhebebewegung des Verriegelungsteiles 110 auch die Zugstange 24 angehoben wird.

Die Materialausnehmung 190 kann schlitzförmig, beispielsweise in Art eines V-förmigen Schlitzes, ausgebildet sein. Auch kann die Materialausnehmung 190 als dreiecksförmiger Durchgang oder in einer anderen mehreckigen Form ausgebildet sein, je nachdem welche Form besonders kostengünstig und einfach realisierbar ist.

### Bezugszeichenliste

- 1: Schaltvorrichtung
- 2: Wählhebel
- 3: erste Schaltgasse
- 4: zweite Schaltgasse
- 5, 5': Schaltsperre
- 6, 6': Schaltsperre
- 7, 7': Schaltsperre
- 10: Bauteil, Verriegelungsteil
- 11: Abschnitt
- 12: Mitnehmer
- 13: Gehäuse
- 14: Verriegelungsposition
- 15: Entriegelungsposition
- 16: Aufnahme
- 17: Durchgangsöffnung, Langloch
- 18: zweite Drehachse
- 19: erste Drehachse
- 20: Verbindungselement, Stift
- 21: Querschaltgasse
- 22: Enden
- 23: Abschnitt
- 24: Zugmittel, Zugstange
- 25: Verbindungselement
- 26: Anschlagsfläche
- 27: Vorsprung

- 100: Schaltvorrichtung
- 110: Verriegelungsteil
- 120: vertikale Führungsfläche
- 130, 130': schräge Führungsfläche
- 140: Übertragungsteil
- 150, 150': Gegenflächenabschnitt
- 160: vertikale Ausgangsstellung
- 170: Mittelachse
- 180: Mittelachse
- 190: Durchgang
- 192: Wandungsabschnitt
- 194: Auslaufbereich
- 196: Führungsteil

- 200: Schaltvorrichtung
- 240: Übertragungselement
- 260: Gehäuseabschnitt

- P: Parken
- R: Rückwärtsfahren
- N: Neutral
- D: Fahren
- S: Sport
- M+: Manuell hochschalten
- M-: Manuell herunterschalten
- M: Manuell neutral

## Patentansprüche

1. Schaltvorrichtung (1) für ein Getriebe mit einem Wählhebel (2), welcher derart bewegbar ist, dass in wenigstens zwei Schaltgassen (3, 4) verschiedene Schaltstufen (P, R, N, D, S, M+, M-) anwählbar sind und ein Umschalten zwischen einer der Schaltgassen (3, 4) und der wenigstens einen anderen Schaltgasse (4, 3) ermöglicht ist, mit wenigstens einer Sperre (5), durch welche der Verfahrweg des Wählhebels (2) bezüglich einer der Schaltgassen (3, 4) für ein Schalten von einer der Schaltstufen (P, R, N, D, S) in eine andere der Schaltstufen (P, R, N, D, S) versperrbar ist, und mit wenigstens einem mit dem Wählhebel (2) mechanisch gekoppelten Verriegelungsteil (10), durch welches die Schaltsperre (5) aktivierbar und deaktivierbar ist, indem bezüglich der zu sperrenden Schaltgasse (3) das Verriegelungsteil (10) in den Verfahrweg des Wählhebels (2) hinein und heraus bringbar ist, **dadurch gekennzeichnet, dass** bei aktivierter Schaltsperre (5) das Verriegelungsteil (10) zumindest mit einem Abschnitt (11) zwischen der Schaltsperre (5) und einem mit dem Wählhebel (2) zusammenwirkenden Mitnehmer (12) eingreift.

2. Schaltvorrichtung nach Anspruch 1, **dadurch gekennzeichnet, dass** die Schaltsperre (5) und die Kontur des Mitnehmers (12) eine Aufnahme (16) zumindest für den Abschnitt (11) des Verriegelungsteils (10) bilden.

3. Schaltvorrichtung nach Anspruch 1 oder 2, **dadurch gekennzeichnet, dass** der Mitnehmer (12) axial bezüglich des Wählhebels (2) verschiebbar ist.

4. Schaltvorrichtung nach einem der vorhergehenden Ansprüche, **dadurch gekennzeichnet, dass** der Mitnehmer (12) eine Durchgangsöffnung (17) aufweist, durch welche sich der Wählhebel (2) erstreckt.

5. Schaltvorrichtung nach einem der vorhergehenden Ansprüche, **dadurch gekennzeichnet, dass** der Mitnehmer (12) ein Langloch (17) aufweist, durch welches sich der Wählhebel (2) erstreckt und vorzugsweise links oder rechts zum Wählhebel (2) eine der Schaltgassen (3, 4) liegt.

6. Schaltvorrichtung (100; 200) für ein Getriebe mit einem Wählhebel (2), welcher derart bewegbar ist, dass in wenigstens zwei Schaltgassen (3, 4) verschiedene Schaltstufen (P, R, N, D, S, M+, M-) anwählbar sind und ein Umschalten zwischen einer der Schaltgassen (3, 4) und der wenigstens einen anderen Schaltgasse (4, 3) ermöglicht ist, mit wenigstens einer Sperre (5), durch welche der Verfahrweg des Wählhebels (2) bezüglich einer der Schaltgassen (3, 4) für ein Schalten von einer der Schaltstufen (P, R, N, D, S) in eine andere der Schaltstufen (P, R, N, D, S) versperrbar ist, und mit wenigstens einem mit dem Wählhebel (2) mechanisch gekoppelten Verriegelungsteil (110), durch welches die Schaltsperre (5) aktivierbar und deaktivierbar ist, indem bezüglich der zu sperrenden Schaltgasse (3) das Verriegelungsteil (110) in den Verfahrweg des Wählhebels (2) hinein und heraus bringbar ist, **dadurch gekennzeichnet, dass** eine Kulissenführung vorgesehen ist, welche die Bewegung des Wählhebels (2) beim Umschalten zwischen den Schaltgassen (3, 4) in die Bewegung des Verriegelungsteils (110) zum Aktivieren oder Deaktivieren der Schaltsperre (5) umsetzt.

7. Schaltvorrichtung nach Anspruch 6, **dadurch gekennzeichnet, dass** der Wählhebel (2) um eine erste Drehachse (19) verschwenkbar ist und die Kulissenführung die Schwenkbewegung des Wählhebels (2) in eine lineare Bewegung des Verriegelungsteils (110) umsetzt.

8. Schaltvorrichtung nach Anspruch 6 oder 7, **dadurch gekennzeichnet, dass** die Kulissenführung durch wenigstens eine im Wesentlichen vertikale Führungsfläche (120) eines mit dem Wählhebel (2) in Richtung der Schaltgassen (3, 4) bewegbaren Führungsteiles (196) und eine schräg dazu angeordnete Führungsfläche (130) des Verriegelungsteiles (110) gebildet ist, wobei das Verriegelungsteil (110) an der Führungsfläche (120) des Führungsteiles (196) vertikal verschiebbar ist und an der schrägen Führungsfläche (130) des Verriegelungsteiles (110) ein die Schwenkbewegung des Wählhebels (2) übertragendes Teil (140; 240) angreift.

9. Schaltvorrichtung nach Anspruch 8, **dadurch gekennzeichnet, dass** das Übertragungsteil (140; 240) einen mit der schrägen Führungsfläche (130) des Verriegelungsteils (110) im Wesentlichen korrespondierenden Gegenflächenabschnitt (150) aufweist, welcher vorzugsweise nach außen gewölbt ist.

10. Schaltvorrichtung nach Anspruch 8 oder 9, **dadurch gekennzeichnet, dass** das Übertragungsteil (140) mit dem Wählhebel (2) fest verbunden, vorzugsweise daran angeformt ist.

11. Schaltvorrichtung nach Anspruch 8 oder 9, **dadurch gekennzeichnet, dass** das Übertragungsteil (240) gegenüber einem Gehäuseabschnitt (260) der Schaltvorrichtung (200) horizontal verschiebbar ist.

12. Schaltvorrichtung nach einem der Ansprüche 8 bis 11, **dadurch gekennzeichnet, dass** das Führungsteil (196) wenigstens zwei vertikale Führungsflächen (120) aufweist, zwischen denen das Verriegelungsteil (110) vertikal verschiebbar ist.

13. Schaltvorrichtung nach einem der Ansprüche 8 bis 12, **dadurch gekennzeichnet, dass** zum Verschwenken des Wählhebels (2) nach links und nach rechts bezüglich einer vertikalen Ausgangsstellung (160) das Verriegelungsteil (110) zwei schräge Führungsflächen (130, 130') aufweist, welche zueinander spiegelsymmetrisch bezüglich der Mittelachse (170) des Verriegelungsteiles (110) angeordnet sind.

14. Schaltvorrichtung nach einem der Ansprüche 8 bis 13, **dadurch gekennzeichnet, dass** zum Anheben des Verriegelungsteiles (110) ein mit einem Zugmittel (24) des Wählhebels (2) gekoppeltes Verbindungselement (20) vorgesehen ist, welches in eine Öffnung, Durchgang, Vertiefung oder dergleichen Materialausnehmung (190) des Verriegelungsteiles (110) eingreift.

15. Getriebe für ein Kraftfahrzeug, insbesondere Automatikgetriebe, mit wenigstens einer Schaltvorrichtung (1, 100, 200) nach einem der vorhergehenden Ansprüche.

## Claims

1. Gearshifting device (1) for a transmission with a selector lever (2), which is movable in such a manner that different gear stages (P, R, N, D, S, M+, M-) in at least two selection lanes (3, 4) are selectable and a changeover between one of the selection lanes (3, 4) and the at least one other selection lane (4, 3) is made possible, with at least one lock (5) by which the travel path of the selector lever (2) can be blocked with respect to one of the selection lanes (3, 4) for switching from one of the gear stages (P, R, N, D, S) to another one of the gear states (P, R, N, D, S), and with at least one locking part (10), which is mechanically coupled with the selector lever (2) and by which the switching lock (5) is activatable and deactivatable in that the locking part (10) can be brought with respect to the selection lane (3), which is to be blocked, into and out of the travel path of the selector lever (2), **characterised in that** when the switching lock (5) is activated the locking part (10) engages at least with a section (11) between the switching lock (5) and an entrainer (12) co-operating with the selector lever (2).

2. Gearshifting device according to claim 1, **characterised in that** the switching lock (5) and the profile of the entrainer (12) form a receptacle (16) at least for the section (11) of the locking part (10).

3. Gearshifting device according to claim 1 or 2, **characterised in that** the entrainer (12) is axially displaceable with respect to the selector lever (2).

4. Gearshifting device according to any one of the preceding claims, **characterised in that** the entrainer (12) has a passage opening (17) through which the selector lever (2) extends.

5. Gearshifting device according to any one of the preceding claims, **characterised in that** the entrainer (12) has a slot (17) through which the selector lever (2) extends and preferably one of the selection lanes (3, 4) lies to the left or the right with respect to the selector lever (2).

6. Gearshifting device (100; 200) for a transmission with a selector lever (2) which is movable in such a manner that different gear stages (P, R, N, D, S, M+, M-) in at least two selection lanes (3, 4) are selectable and a changeover between one of the selection lanes (3, 4) and the at least one other selection lane (4, 3) is made possible, with at least one lock (5) by which the travel path of the selector lever (2) can be blocked with respect to one of the selection lanes (3, 4) for switching from one of the gear stages (P, R, N, D, S) to another one of the gear stages (P, R, N, D, S) and with at least one locking part (110), which is mechanically coupled with the selector lever (2) and by which the switching lock (5) is activatable and deactivatable in that the locking part (110) can be brought with respect to the selection lane (3), which is to be locked, into and out of the travel path of the selector lever (2), **characterised in that** a gate guide is provided, which converts the movement of the selector lever (2) during changeover between the selection lanes (3, 4) into movement of the locking part (110) for activation or deactivation of the switching lock (5).

7. Gearshifting device according to claim 6, **characterised in that** the selector lever (2) is pivotable about a first rotational axis (19) and the gate guide converts the pivot movement of the selector lever (2) into a linear movement of the locking part (110).

8. Gearshifting device according to claim 6 or 7, **characterised in that** the gate guide is formed by at least one substantially vertical guide surface (120) of a guide part (196) movable by the selector lever (2) in the direction of the selection lanes (3, 4) and by at least one guide surface (130), which is arranged at an inclination with resepct thereto, of the locking part (110), wherein the locking part (110) is vertically displaceable at the guide surface (120) of the guide part (196) and a part (140; 240) transmitting the pivot movement of the selector lever (2) engages the inclined guide surface (130).

9. Gearshifting device according to claim 8, **characterised in that** the transmission part (140; 240) has a counter-surface section (150) which substantially co-operates with the inclined guide surface (130) of the locking part (110) and which is preferably curved outwardly.

10. Gearshifting device according to claim 8 or 9, **characterised in that** the transmission part (140) is fixedly connected with the selector lever (2), preferably formed thereon.

11. Gearshifting device according to claim 8 or 9, **characterised in that** the transmission part (240) is horizontally displaceable relative to a housing section (260) of the gearshifting device (200).

12. Gearshifting device according to any one of claims 8 to 11, **characterised in that** the guide part (196) has at least two vertical guide surfaces (120) between which the locking part (110) is vertically displaceable.

13. Gearshifting device according to any one of claims 8 to 12, **characterised in that** for pivotation of the selector lever (2) to the left and the right with respect to a vertical initial setting (160) the locking part (110) has two inclined guide surfaces (130, 130') which are arranged in mirror symmetry to one another with respect to the centre axis (170) of the locking part (110).

14. Gearshifting device according to any one of claims 8 to 13, **characterised in that** provided for lifting the locking part (110) is a connecting element (20) which is coupled with a pull means (24) of the selector lever (2) and which engages in an opening, passage, depression or like material recess (190) of the locking part (110).

15. Transmission for a motor vehicle, particularly automatic transmission, with at least one gearshifting device (1, 100, 200) according to any one of the preceding claims.

## Revendications

1. Dispositif de changement de vitesse (1) pour une boîte de vitesse comprenant un levier de sélection (2), qui peut être déplacé de telle sorte que différents étages de sélection (P, R, N, D, S, M+, M-) puissent être sélectionnés dans au moins deux voies de changement de vitesse (3, 4) et qu'un changement entre l'une des voies de changement de vitesse (3, 4) et l'au moins une autre voie de changement de vitesse (4, 3) soit possible, comprenant au moins une butée (5) avec laquelle la course de déplacement du levier de sélection (2) par rapport à l'une des voies de changement de vitesse (3, 4) pour un changement de vitesse de l'un des étages de sélection (P, R, N, D, S) dans un autre des étages de sélection (P, R, N, D, S) peut être bloquée, et comprenant au moins une pièce de verrouillage (10) accouplée mécaniquement au levier de sélection (2), avec laquelle la butée de changement de vitesse (5) peut être activée et désactivée, en amenant la pièce de verrouillage (10) par rapport à la voie de changement de vitesse (3) à bloquer dans la course de déplacement du levier de sélection (2) et en l'enlevant de ladite course de déplacement, **caractérisé en ce que** lorsque la butée de changement de vitesse (5) est activée, la pièce de verrouillage (10) vient en prise au moins avec une portion (11) entre la butée de changement de vitesse (5) et un dispositif d'entraînement (12) coopérant avec le levier de sélection (2).

2. Dispositif de changement de vitesse selon la revendication 1, **caractérisé en ce que** la butée de changement de vitesse (5) et le contour du dispositif d'entraînement (12) forment un logement (16) au moins pour la portion (11) de la pièce de verrouillage (10).

3. Dispositif de changement de vitesse selon la revendication 1 ou 2, **caractérisé en ce que** le dispositif d'entraînement (12) peut être déplacé axialement par rapport au levier de sélection (2).

4. Dispositif de changement de vitesse selon l'une quelconque des revendications précédentes, **caractérisé en ce que** le dispositif d'entraînement (12) présente une ouverture de passage (17) à travers laquelle s'étend le levier de sélection (2) .

5. Dispositif de changement de vitesse selon l'une quelconque des revendications précédentes, **caractérisé en ce que** le dispositif d'entraînement (12) présente un trou oblong (17) à travers lequel s'étend le levier de sélection (2) et l'une des voies de changement de vitesse (3, 4) se situe de préférence à gauche ou à droite par rapport au levier de sélection (2).

6. Dispositif de changement de vitesse (100 ; 200) pour une boîte de vitesse comprenant un levier de sélection (2), lequel peut être déplacé de telle sorte que différents étages de sélection (P, R, N, D, S, M+, M-) puissent être sélectionnés dans au moins deux voies de changement de vitesse (3, 4) et qu'un changement entre l'une des voies de changement de vitesse (3, 4) et l'au moins une autre voie de changement de vitesse (4, 3) soit possible, comprenant au moins une butée (5) avec laquelle la course de déplacement du levier de sélection (2) par rapport à l'une des voies de changement de vitesse (3, 4) pour un changement de vitesse de l'un des étages de sélection (P, R, N, D, S) dans un autre des étages de sélection (P, R, N, D, S) peut être bloquée, et comprenant au moins une pièce de verrouillage (110) accouplée mécaniquement au levier de sélection (2), avec laquelle la butée de changement de vitesse (5) peut être activée et désactivée, en amenant la pièce de verrouillage (110) par rapport à la voie de changement de vitesse (3) à bloquer dans la course de déplacement du levier de sélection (2) et en l'enlevant de ladite course de déplacement, **caractérisé en ce qu'**un guide à coulisse est prévu, lequel convertit le déplacement du levier de sélection (2) lors du changement entre les voies de changement de vitesse (3, 4) en le déplacement de la pièce de verrouillage (110) pour activer ou désactiver la butée de changement de vitesse (5).

7. Dispositif de changement de vitesse selon la revendication 6, **caractérisé en ce que** le levier de sélection (2) peut pivoter autour d'un premier axe de rotation (19) et le guide à coulisse convertit le mouvement de pivotement du levier de sélection (2) en un déplacement linéaire de la pièce de verrouillage (110).

8. Dispositif de changement de vitesse selon la revendication 6 ou 7, **caractérisé en ce que** le guide à coulisse est formé par au moins une surface de guidage essentiellement verticale (120) d'une pièce de guidage (196) déplaçable dans la direction des voies de changement de vitesse (3, 4) avec le levier de sélection (2) et par une surface de guidage (130) de la pièce de verrouillage (110) disposée obliquement par rapport à ladite surface de guidage (120), la pièce de verrouillage (110) pouvant être déplacée verticalement sur la surface de guidage (120) de la pièce de guidage (196) et une pièce (140 ; 240) transmettant le mouvement de pivotement du levier de sélection (2) venant en prise sur la surface de guidage oblique (130) de la pièce de verrouillage (110).

9. Dispositif de changement de vitesse selon la revendication 8, **caractérisé en ce que** la pièce de transfert (140 ; 240) présente une portion de surface conjuguée (150) correspondant essentiellement à la surface de guidage oblique (130) de la pièce de verrouillage (110), et qui est de préférence courbée vers l'extérieur.

10. Dispositif de changement de vitesse selon la revendication 8 ou 9, **caractérisé en ce que** la pièce de transfert (140) est connectée fixement au levier de sélection (2), de préférence est moulée sur celui-ci.

11. Dispositif de changement de vitesse selon la revendication 8 ou 9, **caractérisé en ce que** la pièce de transfert (240) peut être déplacée horizontalement par rapport à une portion de boîtier (260) du dispositif de changement de vitesse (200).

12. Dispositif de changement de vitesse selon l'une quelconque des revendications 8 à 11, **caractérisé en ce que** la pièce de guidage (196) présente au moins deux surfaces de guidage verticales (120) entre lesquelles la pièce de verrouillage (110) peut être déplacée verticalement.

13. Dispositif de changement de vitesse selon l'une quelconque des revendications 8 à 12, **caractérisé en ce que** pour faire pivoter le levier de sélection (2) vers la gauche et vers la droite par rapport à une position de départ verticale (160), la pièce de verrouillage (110) présente deux surfaces de guidage obliques (130, 130') qui sont disposées l'une par rapport à l'autre avec une symétrie spéculaire par rapport à l'axe médian (170) de la pièce de verrouillage (110).

14. Dispositif de changement de vitesse selon l'une quelconque des revendications 8 à 13, **caractérisé en ce que** pour soulever la pièce de verrouillage (110), on prévoit un élément de connexion (20) accouplé à un moyen de traction (24) du levier de sélection (2), lequel vient en prise dans une ouverture, un passage, un renfoncement ou un évidement de matière similaire (190) de la pièce de verrouillage (110).

15. Boîte de vitesse pour un véhicule automobile, en particulier boîte de vitesse automatique, comprenant au moins un dispositif de changement de vitesse (1, 100, 200) selon l'une quelconque des revendications précédentes.
